# EUROPÄISCHE PATENTSCHRIFT

(11) **EP 2 964 910 B1**
(45) Veröffentlichungstag und Bekanntmachung des Hinweises auf die Patenterteilung: **16.08.2017**
(21) Anmeldenummer: 14713441.5
(22) Anmeldetag: 26.03.2014
(51) Int. Cl.: F01K 23/10

(54) **VERFAHREN ZUM FLEXIBLEN BETRIEB EINER KRAFTWERKSANLAGE**
METHOD FOR FLEXIBLE OPERATION OF A POWER PLANT ASSEMBLY
PROCÉDÉ DESTINÉ AU FONCTIONNEMENT FLEXIBLE D'UNE CENTRALE ÉLECTRIQUE

(30) Priorität: 10.04.2013 EP 13163024
(43) Veröffentlichungstag der Anmeldung: 13.01.2016
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2014/056028
(87) Internationale Veröffentlichungsnummer: WO 2014/166739

(56) Entgegenhaltungen:
- WO-A1-2008/107916
- DE-A1- 19 734 862
- US-A1- 2003 131 601
- US-A1- 2012 260 667

## Beschreibung

Die Erfindung betrifft ein Verfahren zum flexiblen Betrieb einer Kraftwerksanlage gemäß dem Oberbegriff des Anspruchs 1.

Heutzutage wird von modernen Kraftwerksanlagen nicht nur ein hoher Wirkungsgrad gefordert, sondern auch eine möglichst flexible Betriebsweise. Hierzu zählen außer kurzen Anfahrzeiten und hohen Laständerungsgeschwindigkeiten, beispielsweise auch die Möglichkeit, Frequenzstörungen im Netz auszugleichen. Je nach länderspezifischen Anforderungsprofilen an die Netze und den dazugehörigen Vergütungsmodellen kann es daher gerade bei Gas- und Dampfkraftwerksanlagen sinnvoll sein, im Spitzenlastbereich über eine Zusatzfeuerung dem Netz möglichst zügig zusätzliche Leistung über den Wasser-Dampfkreislauf zur Verfügung zu stellen, und zwar auch dann, wenn die Gasturbine bereits bei Volllast betrieben wird.

Durch den Einsatz einer Zusatzfeuerung, die in der Regel innerhalb des Rauchgaskanals eines Abhitzedampferzeugers im Bereich der Wärmetauscherstufen die als Überhitzer- oder Zwischenüberhitzer dienen angeordnet ist, nimmt die an den Wasser-Dampfkreislauf übertragene Wärmeleistung zu, wodurch sich die erzeugte Dampfmenge und in letzter Konsequenz auch die über die Dampfturbine entbundene mechanische Leistung vergrößern. Dabei steigen mit dem Zuschalten der Zusatzfeuerung die Temperaturen des Frischdampfes und des Zwischenüberhitzerdampfes an. Im umgekehrten Fall sinken beide bei der Abschaltung der Zusatzfeuerung wieder ab. Der Änderungsgeschwindigkeit der Frischdampftemperatur bzw. Zwischenüberhitzerdampftemperatur sind allerdings von Seiten der Dampfturbine als dickwandiges Bauteil aus ermüdungstechnischen Gründen Grenzen gesetzt. Während beim Zuschalten der Zusatzfeuerung einer unzulässig schnellen und hohen Steigerung der Dampftemperaturen über den Einsatz einer zugehörigen Einspritzkühleinrichtung noch effektiv begegnet werden kann, ist im umgekehrten Fall eine erforderliche Reduzierung der Einspritzmenge nicht uneingeschränkt möglich. Spätestens zu dem Zeitpunkt, bei welchem die Einspritzkühleinrichtung endgültig geschlossen ist, kann die gewünschte Temperatur von Frischdampf bzw. Zwischenüberhitzerdampf bei einer weiteren Reduzierung der Zusatzfeuerungsleistung nicht mehr aufrechterhalten werden. Beide Dampftemperaturen beginnen zu gleiten. Ihre Änderungsgeschwindigkeit ist dabei unmittelbar an die Änderungsgeschwindigkeit der Zusatzfeuerungsleistung gekoppelt und kann so im ungünstigen Fall die maximal zulässigen Änderungsgeschwindigkeiten der Dampfturbine überschreiten. Eine solche Kraftwerksanlage mit Abhitzedampferzeuger, Zusatzfeuerung und Einspritzkühleinrichtung ist beispielsweise aus der DE 197 34 862 A1 bekannt.

Aufgabe der Erfindung ist es daher, ein Verfahren bereitzustellen, welches es ermöglicht, auch bei einer Lastabsenkung bzw. beim völligen Abschalten der Zusatzfeuerung die Änderungsgeschwindigkeit sowohl der Frischdampf- als auch der Zwischenüberhitzerdampftemperatur in zulässigen Grenzen zu halten.

Diese Aufgabe wird gelöst mit dem Verfahren zum flexiblem Betrieb einer Kraftwerksanlage, welche einen Abhitzedampferzeuger mit Wärmetauscherstufen zum Erzeugen von Frischdampf und/oder Zwischenüberhitzerdampf für eine Dampfturbine aus einem Abgasstrom einer Gasturbine umfasst, wobei in einem Rauchgaskanal des Abhitzedampferzeugers im Bereich der Wärmetauscherstufen eine Zusatzfeuerung angeordnet ist, und wobei zur Regelung des Frischdampfes und/oder des Zwischenüberhitzerdampfes zumindest eine Einspritzkühleinrichtung unmittelbar bei Einsetzen der Zusatzfeuerung in Betrieb genommen wird. So können unabhängig von einer aktuellen Temperatur des Frisch- oder Zwischenüberhitzerdampfes Einspritzkühleinrichtungen unmittelbar (das heißt ohne nennenswerte Zeitverzögerung und damit nahezu zeitgleich) mit dem Einsetzen der Zusatzfeuerung in Betrieb genommen werden. Dadurch kann sowohl die Frischdampftemperatur als auch die Zwischenüberhitzerdampftemperatur über dem gesamten Lastbereich der eingeschalteten Zusatzfeuerung möglichst konstant gehalten werden. Erfindungsgemäß sollte dabei beim Einsetzen der Zusatzfeuerung ein Temperatursollwert des Frischdampfes bzw. des heißen Zwischenüberhitzerdampfes, genau auf die vor Einschalten der Zusatzfeuerung aktuell gemessenen Temperaturwerte des Frischdampfes bzw. Zwischenüberhitzerdampfes eingestellt werden. Sicherheitshalber kann auch eine geringe Temperaturdifferenz von beispielsweise plus 1 K eingestellt werden. Unter diesen Umständen nimmt die Einspritzkühleinrichtung bereits beim Einschalten der Zusatzfeuerung ihren Betrieb auf, so dass mit steigender Zusatzfeuerungsleistung auch die Einspritzmenge kontinuierlich anwächst. Da beide Temperatursollwerte nun so gewählt werden, dass bereits beim Einschalten der Zusatzfeuerung die Einspritzkühlereinrichtung in Betrieb geht, kann auch im umgekehrten Fall für eine Lastabsenkung gewährleistet werden, dass bis zum Abschaltzeitpunkt der Zusatzfeuerung die Dampftemperaturen regelbar bleiben und somit konstant gehalten werden können.

Wahlweise könnte zudem eine Regelung der Dampfendtemperaturen ausschließlich mit Hilfe von Endeinspritzkühleinrichtungen realisiert werden. Dies hat den Vorteil, dass sowohl die Temperatur des Frischdampfes als auch des heißen Zwischenüberhitzerdampfes mit einer noch größeren Regelgüte konstant gehalten werden kann, da mit einer ausschließlichen Regelung über den oder die Endeinspritzkühleinrichtungen wesentlich schneller auf etwaige Dampftemperaturschwankungen reagiert werden kann.

Sind aufgrund hoher Netzanforderungen große Laständerungsgeschwindigkeiten der Zusatzfeuerung erforderlich, so können diese nun mit Hilfe des erfindungsgemäßen Verfahrens auch unter Berücksichtigung eines sicheren Betriebs der Dampfturbine erfüllt werden. Durch die Kopplung der Dampftemperatursollwerte an die aktuell gemessenen Dampftemperaturen beim Einschalten der Zusatzfeuerung, sind die Einspritzkühleinrichtungen im gesamten Lastbereich der Zusatzfeuerung aktiv, was bedeutet, dass beide Dampftemperaturen über dem gesamten Lastbereich der Zusatzfeuerung sowohl für eine Lasterhöhung als auch eine Lastabsenkung konstant gehalten werden können. Somit mündet der Zusatzfeuerungsbetrieb in keinem zusätzlichen Lebensdauerverbrauch der Dampfturbine, was im Falle einer mit der Zusatzfeuerung gleitenden Frischdampf- bzw. Zwischenüberhitzerdampftemperatur nicht gegeben wäre. Die maximalen Laständerungsgeschwindigkeiten der Zusatzfeuerung wären in diesem Falle durch die Dampfturbine begrenzt, wodurch die Anforderungen des Netzes unter Umständen nicht erfüllbar wären, was die Anlageneinsatzflexibilität erheblich beeinträchtigen würde. Grundsätzlich erscheint nämlich der anlagenseitige Wirkungsgradverlust durch die erhöhten Einspritzmengen im Zusatzfeuerbetrieb tolerierbar, da bei Anlagen mit aktivierter Zusatzfeuerung der Wirkungsgrad eine eher untergeordnete Rolle spielt.

Mit den bevorzugten Ausbildungen des erfindungsgemäßen Verfahrens ist es zudem möglich, dass auch aus wirkungsgradtechnischer Sicht ein Optimum erzielt werden kann. Dabei wird die Dampftemperatursollwertvorgabe an geeignete Anlagenparameter gekoppelt, so dass einerseits die maximal möglichen Dampftemperaturen erzielt werden können (geringster Einspritzbedarf) gleichzeitig aber auch gewährleistet ist, dass die Einspritzungen im gesamten Lastbereich der Zusatzfeuerung in Betrieb bleiben, was bedeutet, dass auch bei einer Lastabsenkung immer genügend Einspritzreserve vorhanden ist.

Grundsätzlich gewährleistet so das erfindungsgemäße Verfahren eine hohe Anlagenflexibilität bei gleichzeitig Material schonendem Einsatz der Dampfturbine.

Die Erfindung soll nun beispielhaft anhand einer Skizze erläutert werden. Dargestellt ist ein Raugaskanal R in dem der heiße Abgasstrom S einer nicht näher dargestellten Gasturbine geführt wird. Im Rauchgaskanal R selbst sind mehrere Wärmetauscherstufen 10 bis 15 angeordnet, mit denen Wärmeenergie vom vorbeiströmenden heißen Rauchgas R auf ein WasserDampfgemisch als Arbeitsmedium für eine nachgeschaltete (und nicht näher dargestellte) Dampfturbine übertragen wird. Im hier gezeigten Beispiel sind mehrere Wärmetauscherstufen 10 bis 13 für den eigentlichen Wasser-Dampfkreislauf hintereinandergeschaltet, so dass das in die erste Wärmetauscherstufe 10 eingeleitete Speisewasser W durch diese erste Wärmetauscherstufe als Vorwärmer und die anschließenden Verdampfer und Überhitzer immer weiter erwärmt und so in Dampf D überführt wird. Zudem ist im vorliegenden Ausführungsbeispiel ein zusätzlicher Zwischenüberhitzerkreis, bestehend aus zwei hintereinandergeschalteten Wärmetauscherstufen 14 und 15 zur Zwischenüberhitzung vorgesehen. Kalter Zwischenüberhitzerdampf KZU aus dem Hochdruckteil der Dampfturbine wird dadurch noch mal erwärmt und als heißer Zwischenüberhitzerdampf HZU wieder der Dampfturbine zugeführt. Im Bereich der Wärmetauscherstufen 10 bis 15 ist zudem eine Zusatzfeuerung F angeordnet. Erfindungsgemäß ist nun vorgesehen, dass zur Regelung des Frischdampfes D und/oder des Zwischenüberhitzerdampfes HZU zumindest eine der zwischen und/oder hinter den Wärmetauscherstufen 10 bis 15 angeordnete Einspritzkühleinrichtung 20 bis 23 unmittelbar bei Einsetzen der Zusatzfeuerung F in Betrieb genommen wird. Die zur Regelfunktion des Frisch- bzw. Zwischenüberhitzerdampfes notwendige Steuereinrichtung für die Zusatzfeuerung F und die Einspritzkühleinrichtungen 20 bis 23 sind hier schematisch durch entsprechende regelbare Ventile in den jeweiligen Zuleitungen angedeutet. Mit ihnen kann die Zusatzfeuerung F eingeschaltet werden indem Brennstoff geregelt zugeführt und gezündet wird, sowie die jeweiligen Einspritzkühleinrichtungen 20 bis 23 in Betrieb genommen werden, indem den Einspritzkühleinrichtungen Sprühwasser geregelt zugeführt wird.

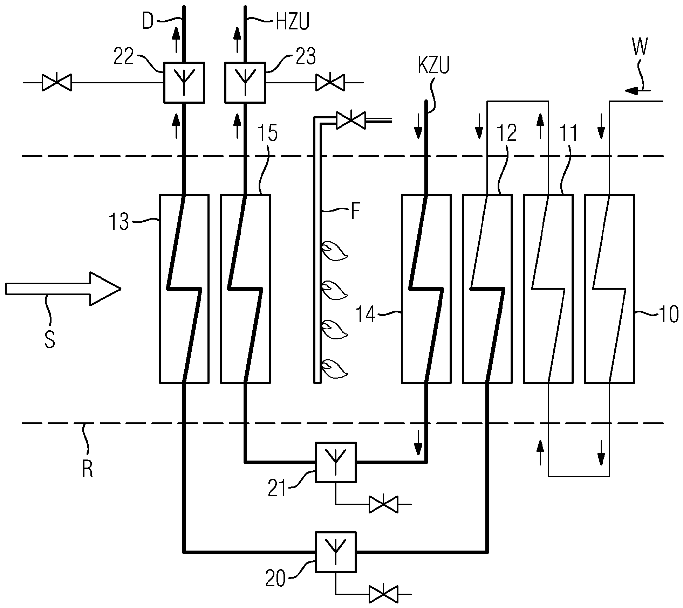

## Patentansprüche

1. Verfahren zum flexiblem Betrieb einer Kraftwerksanlage mit einem Abhitzedampferzeuger mit Wärmetauscherstufen (10-15) zum Erzeugen von Frischdampf (D) und/oder Zwischenüberhitzerdampf (HZU) für eine Dampfturbine aus einem Abgasstrom (S) einer Gasturbine, wobei in einem Rauchgaskanal (R) des Abhitzedampferzeugers im Bereich der Wärmetauscherstufen (10-15) eine Zusatzfeuerung (F) angeordnet ist
**dadurch gekennzeichnet, dass** zur Regelung des Frischdampfes (D) und/oder des Zwischenüberhitzerdampfes (HZU) zumindest eine Einspritzkühleinrichtung (20-23) unmittelbar bei Einsetzen der Zusatzfeuerung (F) in Betrieb genommen wird, wobei beim Einsetzen der Zusatzfeuerung (F) ein Temperatursollwert des Frischdampfes (D) bzw. des heißen Zwischenüberhitzerdampfes (HZU) auf die vor Einschalten der Zusatzfeuerung (F) aktuell gemessenen Temperaturwerte des Frischdampfes (D) bzw. Zwischenüberhitzerdampfes (HZU) eingestellt wird.

2. Verfahren nach Anspruch 1,
**dadurch gekennzeichnet, dass** die Regelung des Frischdampfes (D) und/oder des Zwischenüberhitzerdampfes (HZU) ausschließlich mit einer hinter der jeweiligen letzten Wärmetauscherstufe (13,15) angeordneten Endeinspritzkühleinrichtung (22,23) erfolgt.

## Claims

1. Method for flexible operation of a power plant having a waste heat steam generator with heat exchanger stages (10 - 15) for generating, using an exhaust gas flow (S) of a gas turbine, fresh steam (D) and/or intermediate superheater steam (HZU) for a steam turbine, wherein an auxiliary firing (F) is arranged in a flue gas duct (R) of the waste heat steam generator, in the region of the heat exchanger stages (10 - 15),
**characterized in that**
for regulating the fresh steam (D) and/or the intermediate superheater steam (HZU), at least one injection cooling device (20 - 23) is brought on-line directly upon using the auxiliary firing (F), wherein when using the auxiliary firing (F), a setpoint temperature for the fresh steam (D) or for the hot intermediate superheater steam (HZU) is set to the temperatures of the fresh steam (D) or of the intermediate superheater steam (HZU) actually measured prior to switching on the auxiliary firing (F).

2. Method according to Claim 1,
**characterized in that**
the fresh steam (D) and/or the intermediate superheater steam (HZU) is regulated exclusively with an end injection cooling device (22, 23) arranged downstream of the respective last heat exchanger stage (13, 15).

## Revendications

1. Procédé de fonctionnement souple d'une centrale électrique, comprenant un générateur de vapeur à récupération de la chaleur perdue ayant des étages (10 à 15) d'échangeur de chaleur pour produire de la vapeur (D) vive et/ou de la vapeur (HZU) de surchauffeur intermédiaire pour une turbine à vapeur à partir d'un courant (S) de gaz d'échappement d'une turbine à gaz, dans lequel un foyer (S) supplémentaire est disposé dans un conduit (R) pour du gaz de fumée du générateur de vapeur à récupération de la chaleur perdue dans la région des étages (10 à 15) d'échangeur de chaleur,
**caractérisé en ce que**
pour réguler la vapeur (D) vive et/ou la vapeur (HZU) de surchauffeur intermédiaire, on met en fonctionnement au moins un dispositif (20 à 23) de refroidissement par pulvérisation immédiatement à la mise en oeuvre du foyer (F) supplémentaire, dans lequel, à la mise en oeuvre du foyer (F) supplémentaire, on règle une valeur de consigne de la température de la vapeur (D) vive ou de la vapeur (HZU). mesurées en cours avant l'intercalation du foyer (F) supplémentaire, de la vapeur (D) vive et respectivement de la vapeur (HZU) de surchauffeur intermédiaire.

2. Procédé suivant la revendication 1,
**caractérisé en ce que**
on effectue la régulation de la vapeur (D) vive et/ou de la vapeur (HZU) de surchauffeur intermédiaire exclusivement par un dispositif (22, 23) de refroidissement par pulvérisation monté derrière le dernier étage (13, 15) d'échangeur de chaleur respectif.
